Europäisches Patentamt

**European Patent Office**

**Office européen des brevets**

(11) Publication number: **0 239 296**
**A2**

## (12) EUROPEAN PATENT APPLICATION

(21) Application number: **87302186.9**

(22) Date of filing: **13.03.87**

(51) Int. Cl.⁴: **G01N 27/46**

(30) Priority: **27.03.86 GB 8607777**

(43) Date of publication of application:
**30.09.87 Bulletin 87/40**

(84) Designated Contracting States:
**DE FR GB NL SE**

(71) Applicant: **LAND COMBUSTION LIMITED**
**Stubley Lane**
**Dronfield Sheffield S18 6NQ(GB)**

(72) Inventor: **West, Kenneth O'Neill**
**35 Rivelin Park Road**
**Sheffield(GB)**

(74) Representative: **Ford, Michael Frederick et al**
**MEWBURN ELLIS & CO. 2/3 Cursitor Street**
**London EC4A 1BQ(GB)**

(54) **Electrochemical sensing of gases.**

(57) An electrochemical sensor monitoring the mean concentration of gas in a space, the sensor including a container for containing a quantity of an electrolyte, and working, reference and auxiliary electrodes being in contact with the electrolyte.

So that the cell is able to quantatively determine the presence of one gas in the presence of varying concentrations of another gas which has a lower half-wave potential, the sensor includes two or more metalised membrane cells, or a single metalised membrane (22) having separate areas, constituting separate working electrodes (Wl,W2), on which a metallic layer is deposited, the separate areas being electrically insulated from each other.

FIG.1

## "Electrochemical sensing of gases".

The invention relates to an electrochemical sensor which can be used to measure the concentration of particular gases in a variety of situations.

Sensors of various kinds are used, for example, in monitoring the emission of pollutants from the smoke stacks of power stations burning fossil fuel, but such devices must be of relatively low cost, and must be reliable in the aggressive environment in which they are used. They must be capable of working reliably in temperatures up to 300°C, or even higher, and must not be affected by abrasion from high velocity particulate material or by corrosion from the highly corrosive gases which are present in smoke stack emissions.

In a previous approach to solve the problem of how to reliably monitor the mean concentration of gas in a space, there has been located in the space an electrochemical cell having a container permeable to the gas, the container being filled with a suitable electrolyte, and working, reference and auxiliary electrodes being in contact with the electrolyte, and there has been made an electrochemical determination of the gas at the working electrode, (e.g. by maintaining a potential between the working and reference electrodes and measuring the current between the working and auxiliary electrodes). The working electrode has been constituted by a metallised layer applied to a gas permeable membrane by means of which the container has been permeable to the gas. The third, auxiliary electrode has been used to prevent polarisation of the reference electrode, the three electrodes being connected by means of a potentiostat, the metallised membrane thus acting as an electrocatalytic surface so that gases permeating through it have been able to give rise to a cell current. The cell current has been able to be related to a partial pressure of a particular gas.

Electrochemical cells of the kind just described have worked well in certain situations but have not been able to quantitatively determine the presence of one gas in the presence of varying concentrations of another gas which has a lower half-wave potential.

The invention as claimed is intended to provide a remedy. It solves the problem of how to monitor the mean concentration of gas in a space in a most convenient manner.

The advantages offered by the invention are, mainly, that it provides a method by means of which the presence of one gas can be quantatively determined in the presence of varying concentrations of another gas which has a lower half-wave potential.

One way of carrying out the invention is described in detail below with reference to drawings which illustrate, by way of example, one specific embodiment, in which:-

Figure 1 is a semi-diagrammatic view of an electrochemical sensor embodying the invention,

Figure 2 is a part sectional view on the line 2-2 in Figure 1,

Figure 3 is a diagrammatic representation showing the electrical connections of the sensor,

Figure 4 is a collection of polarograms of major pollutants, and

Figure 5 is a graphic representation showing the responses to step changes in levels of concentrations of Sulphur Dioxide and Nitric Oxide.

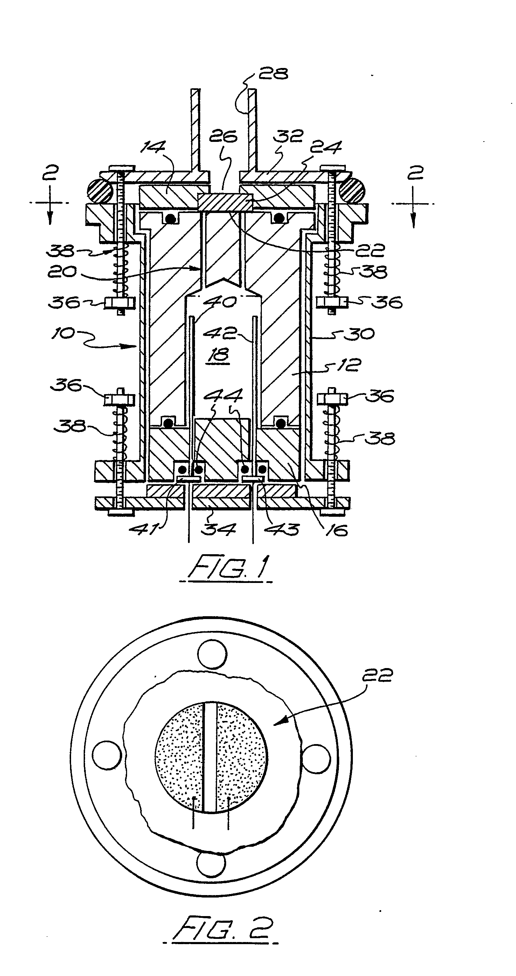

Referring now to Figure 1 of the drawings, the electrochemical sensor there illustrated has a container generally indicated 10, in the form of a body part 12 with end caps 14 and 16. A central cavity 18 is formed within the body part and a number of small holes 20 extend from the upper end of the cavity to the top surface of said body part. A metallised membrane 22 and a sintered stainless steel disc 24 overlie the small holes 20, the membrane 22 and disc 24 being contained in a counterbore in the underside of the end cap 14. A central bore 26 in said end cap communicates with a passage 28 which, in use of the sensor, will communicate with the interior of a smoke stack which is to be monitored for atmospheric pollutants. For reasons which will presently be explained, the parts which form the container 10, that is to say the body part 12 and end caps 14 and 16, are made of a high performance polymer and are loosely contained in a metal sleeve 30 with end plates 32 and 34, the passage 28 being formed in an integral stub portion of the end plate 32. The end plates are connected to flange portions of the metal sleeve by means of nuts and bolts 36 and springs 38.

A suitable electrolyte is contained in the central cavity of the body part, and a reference electrode 40 and an auxiliary electrode 42 extend through respective holes in the end cap 16 of the container and into the electrolyte. Respective metal sealing plates 41,43 have been brazed around the said reference and auxiliary electrodes and these are contained in respective counterbores in the end plate to bear against respective 0-ring seals 44.

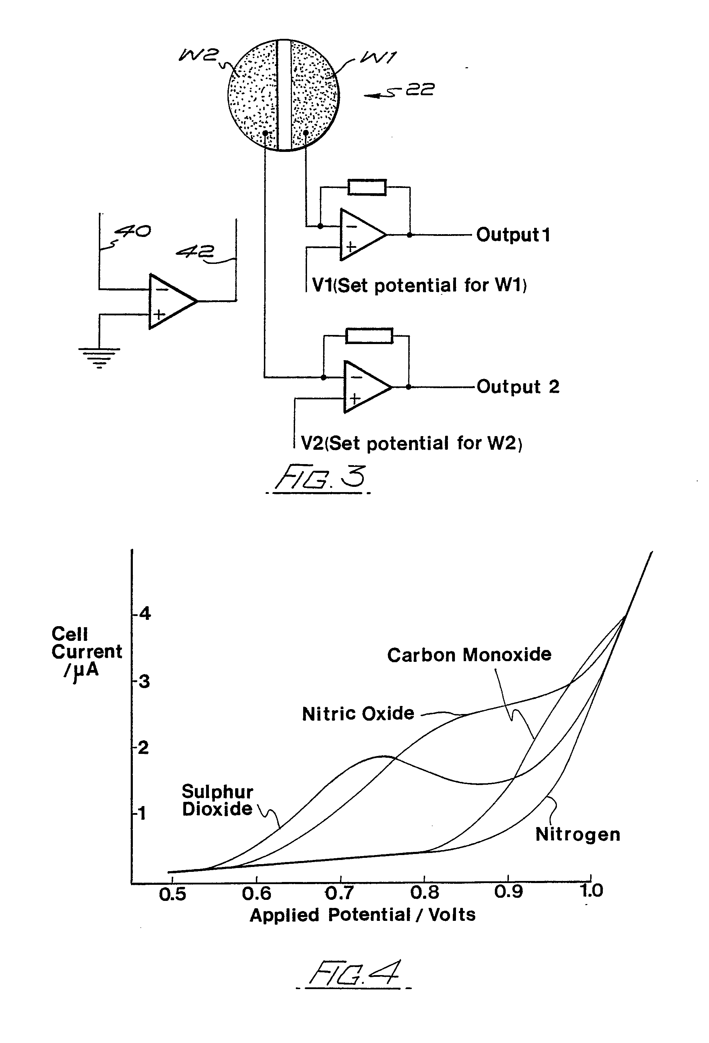

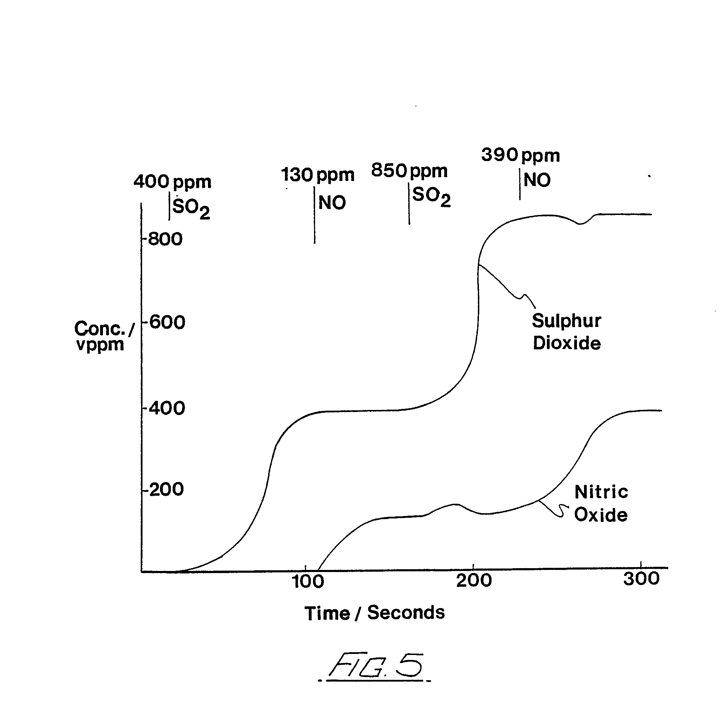

Referring now in particular to Figures 2 and 3, it will be seen that the metallised membrane 22 has two separate areas, constituting separate working electrodes W1 and W2, on which the metallised layer is deposited, the separate areas being electrically insulated from one another and both working electrodes being controlled by a single potentiostat. (A single auxiliary electrode is shown for this configuration but it will be understood that a multi-potentiostat configuration would require multiple auxiliary electrodes).

The arrangement is such that the sensor just described constitutes a pair of metallised membrane cells with a common reference electrode. When the working electrodes are held at appropriate potentials and the resulting cell currents compared, the ratio between the currents at the different applied potentials is a characteristic of each gas being monitored. In Figure 4 there are plotted the polarograms of major pollutants in flue gas emissions, that is to say of Sulphur Dioxide, Nitric Oxide and Carbon Monoxide. The plot for Nitrogen is the background current of the cell and is shown for comparison. In Figure 5 there is shown the responses to step changes in the levels of concentrations of Sulphur Dioxide and Nitric Oxide.

It will be seen from Figure 4, that by selecting a working potential below 0.8 volts the cell can be rendered insensitive to Carbon Monoxide but that below this potential there is still considerable overlap of the Nitric Oxide and Sulphur Dioxide polarograms. Since these two gases are the major pollutants which are required to be monitored in flue emissions, and since their relative sensitivity is closely comparable, the inventive method is ideal for monitoring the two.

It has been found that the sensor can discriminate between the two gases if the two areas of the metallised membrane constituting the two separate working electrodes are held at different potentials with respect to the working electrode such that each of the potentials lies in the region of the polarogram where a different response is obtained for each of the two gases. By comparing the ratio of the currents obtained with that obtained for each of the gases separately it is possible to determine the relative concentration of each of the two gases.

Combining the ratio of concentrations with either of the individual currents then allows the absolute concentrations of the two gases to be calculated.

In Figure 5 there is shown the indicated concentrations, as calculated by a microprocessor, in response to the indicated step changes in concentration of the two gases. It may be seen that any "cross-talk" between the two indicated concentrations is small and temporary and that the response time is sufficiently short to provide a useful indication of gas concentration within a flue.

Thus there is provided a method of and means for quantitatively determining the presence of one gas in the presence of varying concentrations of another which has a lower half-wave potential. An electrochemical sensor embodying the invention can be produced economically and can be expected to work reliably in the aggressive environment of a power station smoke stack. However, various modifications may be made. For example, it will be understood that it is not essential for the two working electrodes to be constituted by separate metallised areas of a single membrane. They could be completely separate membranes. It will also be understood that instead of connecting together potentiometrically, the two metallised membrane cells forming part of the electrochemical cell, controlling the potentials and comparing the resulting cell currents at the different applied potentials, it is also possible to connect the two metallised membrane cells amperometrically, to control the currents and to compare the resulting cell potentials at the different applied currents, the ratio between the potentials at the different applied currents then being a characteristic of each gas.

In order to enable the sensor to operate in a temperature in excess of 300°C, means may be provided for removing heat from the body of the sensor. For example, the body of the sensor could be mounted in a heat sink surrounded by a thermal barrier, and heat could be removed from the heat sink by the use of a heat pipe extending to a heat removal zone located outside the stack. The heat removal zone could comprise the condenser end of the heat pipe being finned so that heat loss is by natural convection.

## Claims

1. A method of determining the concentrations of particular gases in a space, the method including the step of locating in the space at least one electrochemical cell having a container permeable to the gas, characterised by the steps of connecting together, either amperometrically or potentiometrically, two or more metallised membrane cells forming part of the cell or of respective cells, as the case may be, controlling the currents or potentials, as the case may be, and comparing the resulting cell potentials or currents respectively, at the different applied currents or potentials, the ratio between the potentials or currents at the different currents or potentials respectively being a characteristic of each gas.

2. An electrochemical sensor constituted by a gas permeable container (I0) containing an electrolyte and working, reference and auxiliary electrodes (22,40,42) in contact with the electrolyte, characterised in that the sensor includes two or more metallised membrane cells, formed within the container, or a single metallised membrane having separate areas, constituting separate working electrodes (WI,W2) on which the metallic layer is deposited, the separate areas being electrically insulated from one another and the working electrodes being controlled either by separate potentiostats, each with its individual auxiliary electrode, or by a single potentiostat utilising a single auxiliary electrode.

3. An electrochemical sensor according to claim 2, further characterised in that the body (l2) of the sensor is mounted in a heat sink surrounded by a thermal barrier, a heat pipe being connected to the heat sink and extending to a heat removal zone.

_FIG.1_

_FIG.2_

FIG. 3

Output 1

V1(Set potential for W1)

Output 2

V2(Set potential for W2)

Cell Current /μA

Carbon Monoxide

Nitric Oxide

Sulphur Dioxide

Nitrogen

Applied Potential / Volts

FIG.4

FIG. 5